# EUROPEAN PATENT APPLICATION

(11) **EP 2 693 345 A1**
(43) Date of publication of application: **05.02.2014**
(21) Application number: 12762948.3
(22) Date of filing: 02.03.2012
(51) Int. Cl.: G06F 17/22, G06F 3/023, G06F 3/048, H03M 11/04

(54) **MOBILE TERMINAL**

(30) Priority: 31.03.2011 JP 2011078994
(71) Applicant: NTT DOCOMO, INC., Chiyoda-ku Tokyo 100-6150 (JP)
(72) Inventor: NAKAMURA Kouichi, Tokyo 100-6150 (JP)
(74) Representative: Viering, Jentschura & Partner
(86) International application number: PCT/JP2012/055470
(87) International publication number: WO 2012/132767

(57) **Abstract**

A mobile terminal (1) is provided with: a touch panel display (3); an input prediction candidate storage unit (30) for storing input prediction candidates associated with character strings; a symbol generation unit (21) which refers to the input prediction candidate storage unit (30) on the basis of a character string input from the touch panel display (3), and displays in the vicinity of a cursor (14b) a corresponding input prediction candidate as symbol having an image attached thereto; and an input control unit (22) for, if it is detected that one object (15) has been selected, inputting the input prediction candidate included in the object (15) at the position of the cursor (14b).

## Description

### Technical Field

The present invention relates to a mobile terminal including a touch panel display.

### Background Art

Mobile terminals having a function for displaying words that are associated with a character or a character string input have become popular. For example, Fig. 3 in Patent Literature 1 discloses words as input prediction candidates displayed in a prediction candidate display region in a section lower than a message body region where a message body is displayed.

### Citation List

### Patent Literature

Patent Literature 1: Japanese Patent Application Laid-Open Publication No. 2011-022907

### Summary of Invention

### Technical Problem

However, in a mobile terminal including a conventional character input device described above, because words as input prediction candidates are displayed in the input prediction candidate display region in list form, a user thereof has to select a desired word by operating a given key, for example. In addition, because words as input prediction candidates are displayed in an enumerated fashion, it may be impossible to help the user intuitively input the desired input prediction candidate.

The present invention has been made to solve such problems and aims at providing a mobile terminal that enables more intuitive and easier input.

### Solution to Problem

To solve the above-mentioned problems, a mobile terminal of the present invention includes a touch panel display; input prediction candidate storage means for storing input prediction candidates associated with character strings; input prediction candidate display means for referring to the input prediction candidate storage means on the basis of a character string input from input means and displaying corresponding input prediction candidates as pieces of input prediction candidate information around an input position; and input control means for, after detecting that one piece of input prediction candidate information is selected, inputting a corresponding input prediction candidate displayed as the piece of input prediction candidate information into the input position.

In this invention, input prediction candidates corresponding to a character string are displayed one by one as pieces of input prediction candidate information around the input position on the touch panel display. Because a user can input by operation of simply selecting one piece of input prediction candidate information from among the pieces of input prediction candidate information displayed around the input position, it is possible to provide input that is intuitive and easy for the user.

In addition, in the mobile terminal of the present invention, the input prediction candidate display means can display the pieces of input prediction candidate information as symbols.

In this invention, input prediction candidates corresponding to a character string are symbolized one by one and displayed around the input position on the touch panel display. The symbols herein mean objects into which character strings or pictographs, for example, as the input prediction candidates are graphically processed (converted) on a word-by-word or phrase-by-phrase basis. Because the user can input by operation of simply selecting one symbol from among the symbols displayed around the input position, it is possible to provide input that is intuitive and easy for the user.

In addition, the mobile terminal of the present invention further may also include priority assigning means for assigning priorities to the input prediction candidates stored in the input prediction candidate storage means. The input prediction candidate display means may change a display form of the pieces of input prediction candidate information displayed around the input position on the basis of the priorities.

In this case, a display form such as size or a pattern of the pieces of input prediction candidate information (symbol), or overlapping order of the pieces of input prediction candidate information is changed, whereby it is possible to provide more intuitive input for the user.

In the mobile terminal of the present invention, the priority assigning means may divide the input prediction candidates into a plurality of groups on the basis of the priorities and the input prediction candidate display means may switch the pieces of input prediction candidate information to be displayed around the input position from one group to another.

In this case, it is possible to display many pieces of input prediction candidate information around the input position where space is limited.

In the mobile terminal of the present invention, the input prediction candidate display means can, after detecting that flick or drag is performed in a predetermined direction on the touch panel display, display the pieces of input prediction candidate information belonging to another group in place of the pieces of input prediction candidate information displayed before the flick or drag is performed. In the mobile terminal of the present invention, the input prediction display means can, after detecting that flick or drag is performed on one piece of input prediction candidate information toward outside of the touch panel display, display another piece of input prediction candidate information that is not displayed before the flick or drag is performed.

Accordingly, in displaying other pieces of input prediction candidate information, it is possible to provide input that is more in intuitive and easier input for the user.

In the mobile terminal of the present invention, the priority assigning means can assign the priorities on the basis of use frequencies of the input prediction candidates. In the mobile terminal of the present invention, attribute information can be associated with each of the input prediction candidates stored in the input prediction candidate storage means and the priority assigning means can assign the priorities on the basis of an attribute of the terminal at time of inputting and the attribute information.

In this case, by assigning the priorities based on the attribute information, it is possible to provide more intuitive input for the user.

In addition, in the mobile terminal of the present invention, the input prediction candidate display means can display the pieces of input prediction candidate information surrounding the input position on the basis of positional information of the input position. In addition, in the mobile terminal of the present invention, the input prediction candidate display means can display the pieces of input prediction candidate information moving around the input position on the basis of positional information of the input position.

In this case, the pieces of input prediction candidate information become more visually prominent, and thus it is possible to help the user input more intuitively.

In addition, in the mobile terminal of the present invention, the input control means may, after detecting that one piece of input prediction candidate information is tapped or that one piece of input prediction candidate information is flicked toward the input position, input an input prediction candidate displayed as the piece of input prediction candidate information into the input position.

In this case, because the user can input one piece of input prediction candidate information selected from among the pieces of input prediction candidate information displayed around the input position by tapping or flicking the one piece to the input position, it is possible to provide input that is intuitive and easy for the user.

In addition, in the mobile terminal of the present invention, the input control means may, after detecting that one piece of input prediction candidate information is dragged and dropped between character strings that have been input, input an input prediction candidate displayed as the piece of input prediction candidate information between the character strings.

In addition, in the mobile terminal of the present invention, the input prediction candidate display means may, after detecting that one input prediction candidate is pinched out or double tapped, display a piece of input prediction candidate information corresponding thereto in enlarged form and the input control means may adjust a display size of the input prediction candidate to be input into the input position on the basis of a display size of the piece of input prediction candidate information. In addition, in the mobile terminal of the present invention, the input prediction candidate display means may, after detecting that one input prediction candidate is pinched in, display a piece of input prediction candidate information corresponding thereto in reduced form and the input control means may adjust a display size of the input prediction candidate to be input into the input position on the basis of a display size of the piece of input prediction candidate information.

### Advantageous Effects of Invention

With the mobile terminal of the present invention, intuitive and easy input becomes possible.

### Brief Description of Drawings

Fig. 1 is an external view of a mobile terminal according to a present embodiment.
Fig. 2 is a block diagram illustrating a functional configuration of the mobile terminal depicted in Fig. 1.
Fig. 3 is a diagram for explaining one example of a screen of a mail application.
Fig. 4 is a diagram for explaining one example of display at the time of flicking on the screen of the mail application.
Fig. 5 is a diagram illustrating a hardware configuration of the mobile terminal depicted in Fig. 1.
Fig. 6 is a flowchart illustrating a flow of input character control in the mobile terminal depicted in Fig. 1.
Fig. 7 is a flowchart illustrating the flow of the input character control following Fig. 6.
Fig. 8 includes explanatory diagrams for explaining input control that is different from that of the present embodiment in an input control unit.
Fig. 9 includes explanatory diagrams for explaining a method for displaying objects.
Fig. 10 includes explanatory diagrams for explaining a method for switching display objects.

### Description of Embodiments

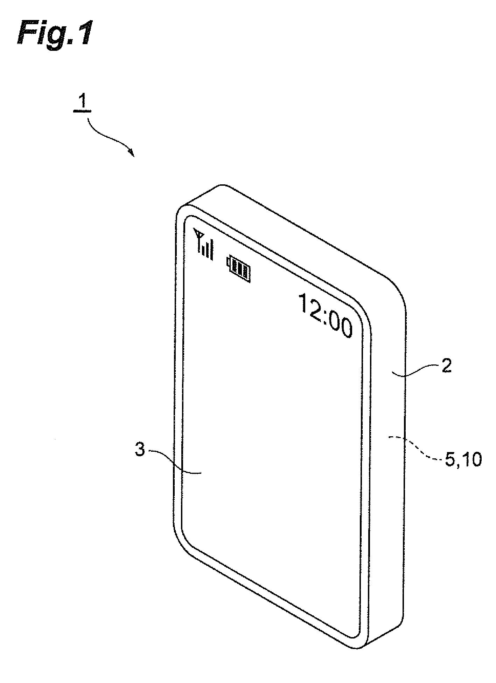

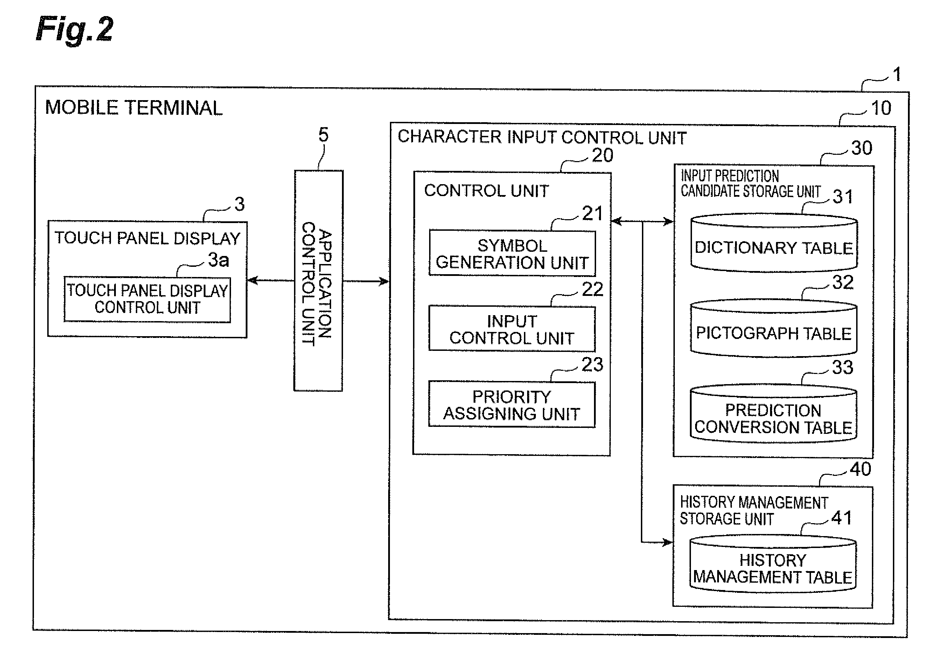

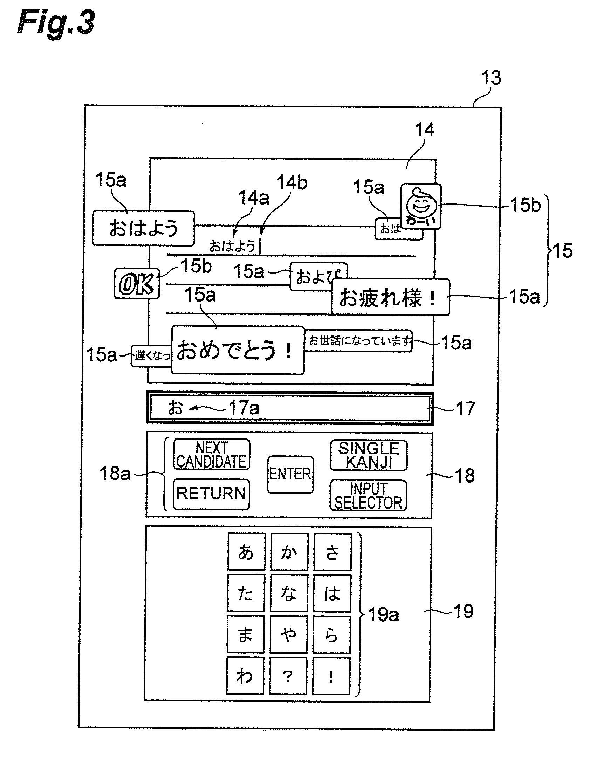

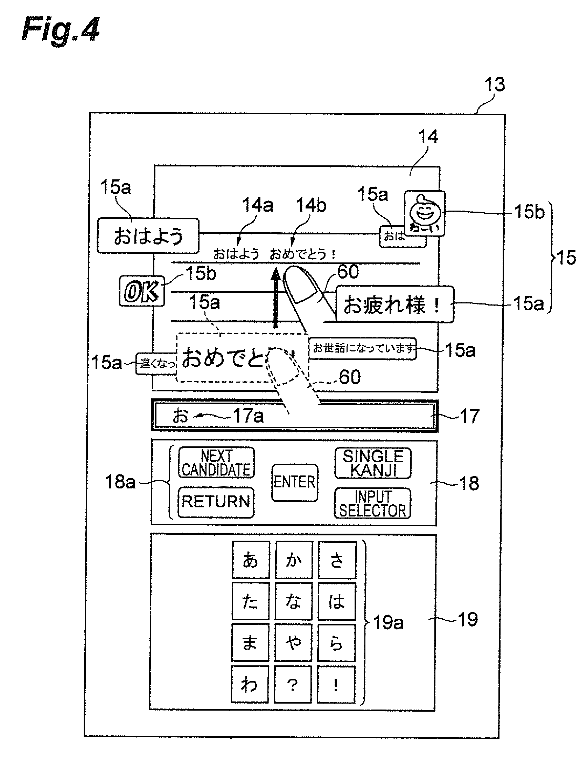

An embodiment of the present invention will be described with reference to the attached drawings. If possible, like numerals refer to like parts, and duplicated explanation will be omitted. Fig. 1 is an external view of a mobile terminal according to the present embodiment. Fig. 2 is a block diagram illustrating a functional configuration of the mobile terminal depicted in Fig. 1. Fig. 3 is a diagram for explaining one example of a screen of a mail application. Fig. 4 is a diagram for explaining one example of display at the time of flicking on the screen of the mail application. Terms indicating directions such as "upper", "lower", "left", and "right" in the explanations are convenient words based on states depicted in the drawings.

This mobile terminal 1 includes a touch panel display (input means) 3, an application control unit 5, and a character input control unit 10 as depicted in Fig. 1 and Fig. 2.

The touch panel display 3 is arranged on a surface of one side of a housing 2 and is an electronic component also having an input/output function. In the touch panel display 3, input to and output from the touch panel display 3 are controlled by a touch panel display control unit 3 a. Examples of input that the touch panel display control unit 3a receives include contact with the touch panel display 3 by a user using his/her fingers or a pen for a touch panel, for example. Examples of output that the touch panel display control unit 3a performs include displaying a display screen as depicted in Fig. 3 displayed through the mail application or visual contents such as characters or images on the touch panel display 3. The touch panel display control unit 3a outputs received input to the character input control unit 10 via the application control unit 5 and receives output from the character input control unit 10 via the application control unit 5.

The application control unit 5 is a component that executes various applications. Examples of the applications that the application control unit 5 executes include the mail application, a memo pad application, and a scheduler. The application control unit 5 displays various application screens on the touch panel display 3 and also relays input to and output from the touch panel display 3 and input to and output from the character input control unit 10. Hereinafter, a case when the character input control unit 10 operates on the mail application that the application control unit 5 executes will be described.

The mail application that is one of applications that the application control unit 5 controls will be described here with reference to Fig. 3. The mail application provides functions such as input of a mail message body, transmission, reception of a mail, and display of a received mail for the user. Fig. 3 illustrates one example of a screen of the mail application (hereinafter, referred to as a mail screen) that is displayed on the touch panel when the mail application is started. This mail screen 13 includes a message body display region 14, an input character display region 17, a menu display region 18, and an input region 19.

The message body display region 14 is a section that displays a message body 14a input by the user and a cursor (input position) 14b indicating a position into which characters are to be input. The input character display region 17 is a section that displays a character string input via the touch panel display 3 in real time. The menu display region 18 displays menu buttons 18a for starting various functions. The input region 19 is a section that displays keys 19a for inputting characters, for example. Examples of the character or the character string include hiraganas, katakanas, alphabets, numerals, and signs.

The character input control unit 10 is a component that controls characters input into the screen displayed on the touch panel display 3, and has a control unit 20 for implementing functions on character input control, an input prediction candidate storage unit (input prediction candidate storage means) 30 for storing input prediction candidate associated with character strings, and a history management storage unit 40 for storing use frequencies in association with the input prediction candidates.

The control unit 20 controls the touch panel display 3, the application control unit 5, the input prediction candidate storage unit 30, and the history management storage unit 40. The control unit 20 has a symbol generation unit (input prediction candidate display means) 21, an input control unit (input control means) 22, and a priority assigning unit (priority assigning means) 23.

The symbol generation unit 21 is a component that refers to the input prediction candidate storage unit 30 on the basis of a character string input via the touch panel display 3 and displays the corresponding input prediction candidates as symbols (pieces of input prediction candidate information) 15 (hereinafter, referred to as "objects 15") around the cursor 14b (see Fig. 3). Assuming that one character such as 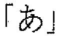 also is referred to as a character string herein, the following description will be made.

The symbol generation unit 21, for example, after receiving a character string 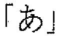 input by the user, reads input prediction candidates associated with the character string 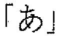 from a dictionary table 31, a pictograph table 32, and a prediction conversion table 33 contained in the input prediction candidate storage unit 30, and displays the object 15 around the cursor 14b displayed on the mail screen 13. The term "around the cursor 14b" indicates being in an area where the objects 15 do not overlap the cursor. The objects 15 include objects 15a into which character strings are converted and objects 15b into which pictographs or images are converted.

The input control unit 22 is a component that, when one of the objects 15 selected by the user is flicked (selected) to the cursor 14b by a finger 60, inputs an input prediction candidate contained in the one of the objects 15 into the cursor 14b. When one of the objects is flicked toward the cursor 14b via the touch panel display 3, the input control unit 22 causes the message body display region 14 on the mail screen 13 to display the input prediction candidate corresponding to the one of the objects as the message body 14a via the application control unit 5.

The priority assigning unit 23 is a component that assigns priorities to input prediction candidates stored in the input prediction candidate storage unit 30. The priority assigning unit 23 refers to the history management storage unit 40 described later, and assigns priorities based on use frequencies corresponding to the input prediction candidates. The symbol generation unit 21 can change a display form such as color or display size of the objects 15 displayed around the cursor 14b on the basis of the priorities.

The input prediction candidate storage unit 30 has the dictionary table 31 for storing kanji characters associated with character strings, the pictograph table 32 for storing pictograph images associated with character strings and names thereof, and the prediction conversion table 33 for storing prediction character strings associated with character strings. The history management storage unit 40 stores as the numbers of times use frequencies with which input prediction candidates displayed as the objects 15 are actually used as the message body 14a.

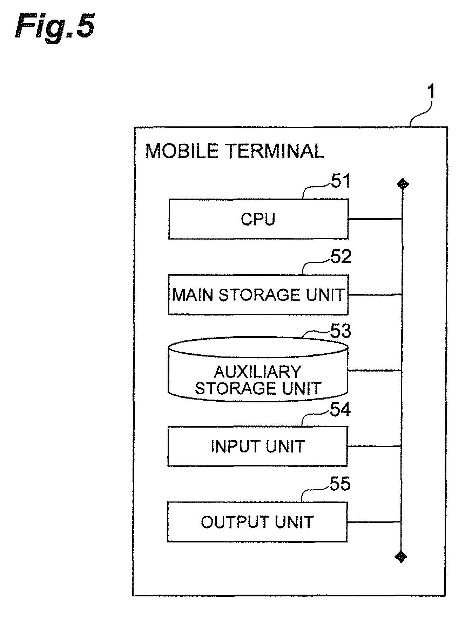

Fig. 5 is a diagram illustrating a hardware configuration of the mobile terminal. The mobile terminal 1 is configured with a CPU 51 for executing an operating system or an application program, for example, a main storage unit 52 constructed of a ROM and a RAM, an auxiliary storage unit 53 constructed of a hard disk or a memory, for example, as the input prediction candidate storage unit 30 or the history management storage unit 40, an input unit 54 such as an operation button and the touch panel display 3, and an output unit 55 such as the touch panel display 3. Each function of the application control unit 5 and the control unit 20 described above is implemented by causing the CPU 51 and the main storage unit 52 to read predetermined software and, under control of the CPU 51, causing the touch panel display 3 to display information, reading information input at the touch panel display 3, or causing the main storage unit 52 and the auxiliary storage unit 53 to read and write data.

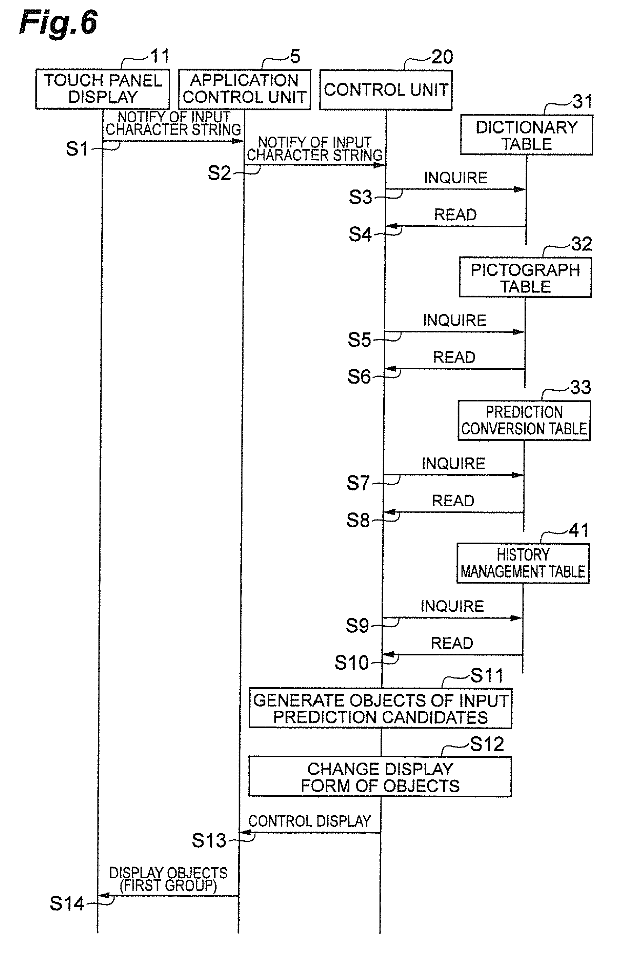

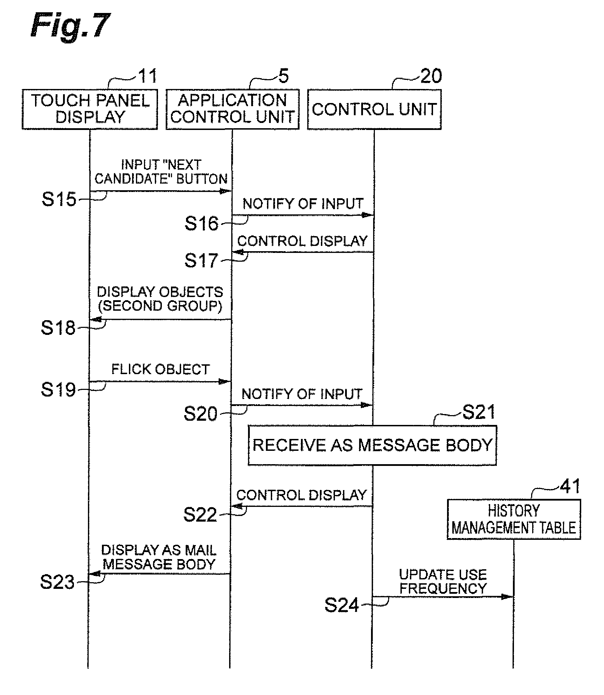

Processes in controlling input characters that are characterizing portions of the present embodiment will be described hereinafter with reference to Fig. 6 and Fig. 7. Fig. 6 is a flowchart illustrating a flow of input character control in the mobile terminal. Fig. 7 is a flowchart illustrating the flow of the input character control following Fig. 6.

The input character control when the mail application is operating by the application control unit 5 will be described herein. In the mobile terminal 1 when the mail application is operating, the touch panel display 3 first receives input of a character from the user and notifies the application control unit 5 (S1). For example, a character string 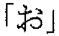 is input via the touch panel display 3, and the application control unit 5 is notified of this character string 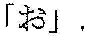

Next, the application control unit 5, after receiving the character string 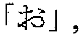 displays the character string 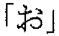 in the input character display region 17 on the mail screen 13 and also notifies the control unit 20 of this character string 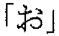 (S2).

Next, the symbol generation unit 21 included in the control unit 20, after receiving the character string 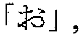 inquires of each of the dictionary table 31, the pictograph table 32, and the prediction conversion table 33 in the input prediction candidate storage unit 30 whether there is a character string or a pictograph associated with the character string 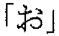 (S3, 5, 7).

Next, the symbol generation unit 21, when finding input prediction candidates such as 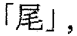 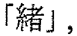 and 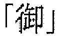 associated with the character string 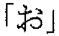 in the dictionary table 31, reads these input prediction candidates from the dictionary table 31 (S4). In addition, the symbol generation unit 21, when finding input prediction candidates for pictographs whose names start with 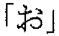 in the pictograph table 32, reads these input prediction candidates from the pictograph table 32 (S6).

In addition, the symbol generation unit 21, when finding input prediction candidates such as 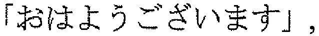 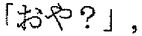 and 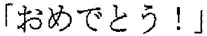 associated with the character string 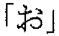 in the prediction conversion table 33, reads these input prediction candidates from the prediction conversion table 33 (S8).

Next, the symbol generation unit 21 inquires of the history management table 41 in the history management storage unit 40 whether there is information on use frequencies with respect to the respective input prediction candidates read from the dictionary table 31, the pictograph table 32, and the prediction conversion table 33 (S9). The symbol generation unit 21, when finding information on the numbers of times as the use frequencies associated with the respective input prediction candidates in the history management table 41, reads the numbers of times together with the input prediction candidates (S10).

Next, the symbol generation unit 21 generates the objects 15 for the respective input prediction candidates read from the dictionary table 31, the pictograph table 32, and the prediction conversion table 33 (S11). At this time, the priority assigning unit 23 assigns priorities to the above objects 15 on the basis of the numbers of times as the use frequencies read from the history management table 41. The symbol generation unit 21 changes the size or color of the objects 15 on the basis of these priorities (S 12).

For example, based on the use frequencies read from the history management table 41, the symbol generation unit 21 may change the display form of the objects 15 to LL size for 100 times or more, L size for 50 times or more, M size for 11 times or more and 49 times or less, and S size for 10 times or less. In addition, if objects only in one kind of size are displayed as a result of the above-described change, it is possible to change the display form again. For example, if objects in M size only are displayed, the symbol generation unit 21 may change again the display form to LL size for 40 times or more and 49 times or less of use frequency, L size for 30 times or more and 39 times or less, M size for 20 times or more and 29 times or less, and S size for 19 times or less.

In addition, based on the priorities assigned by the priority assigning unit 23, the symbol generation unit 21 may change the display form such that the overlapping order of the objects 15 changes. For example, the priority assigning unit 23 may assign higher priorities to input prediction candidates for which the numbers of times as their use frequencies are larger, and the symbol generation unit 21 may change the display form such that objects corresponding to the input prediction candidates with higher priorities are displayed on the further front side.

Next, the symbol generation unit 21 controls the application control unit 5 to display the objects 15 in accordance with the size or color determined at step S12 around the cursor 14b displayed on the mail screen 13 (S 13), and displays the objects 15 around the cursor 14b (S14).

At this time, the priority assigning unit 23 divides the objects 15 into a plurality of groups on the basis of the use frequencies, and the symbol generation unit 21 can switch the objects 15 to be displayed around the cursor 14b from one group to another. For example, the priority assigning unit 23 may divide the objects 15 into a first group and a second group on the basis of the use frequencies and the symbol generation unit 21 may switch the groups from one to another by receiving input of "NEXT CANDIDATE" button among the buttons 18a displayed in the menu display region 18 via the touch panel display 3. In this case, the application control unit 5 receives the input of "NEXT CANDIDATE" button among the buttons 18a displayed in the menu display region 18 via the touch panel display 3 (S15), and notifies the symbol generation unit 21 of this information (S16). The symbol generation unit 21 receiving this information controls the application control unit 5 (S17) and causes the objects 15 belonging to the second group to be displayed around the cursor 14b (S18). Accordingly, it is possible to display the objects 15 in large numbers as input prediction candidates around the cursor 14b where space is limited.

Next, the application control unit 5, after receiving information indicating that one of the objects 15 corresponding to 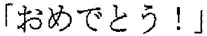 is flicked to the vicinity of the cursor 14b from the touch panel display 3, for example, as depicted in Fig. 4 (S19), notifies the input control unit 22 of this information (S20). The input control unit 22, after receiving this information, receives an input prediction candidate 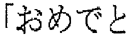 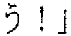 corresponding to the flicked one of the objects as a character string to be input into the cursor 14b (S21). Next, the input control unit 22 controls the application control unit 5 (S22) and causes the character string thus received to be displayed at the cursor 14b (S23).

The input control unit 22, after receiving the input prediction candidate 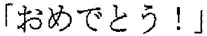 corresponding to the flicked one of the objects 15 as the character string to be input into the input position in the message body at step S21, updates the number of times as a use frequency associated with the input prediction candidate 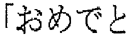 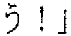 by incrementing the number by "one" with respect to the history management table 41 stored in the history management storage unit 40 (S24).

As described above, with the mobile terminal 1 of the present embodiment, input prediction candidates corresponding to a character string are converted into objects one by one and displayed around the cursor 14b on the mail screen 13. The user can input the message body 14a by performing easy operation of simply flicking one object among the objects 15 as the input prediction candidates displayed around the cursor 14b via the touch panel display 3. As a result of this, it is possible to provide input that is intuitive and easy for the user.

In the foregoing, the present invention has been described in detail based on an embodiment thereof. However, the present invention is not limited to the above-described embodiment. Various modifications as described below can be made within the scope not departing from the spirit of the present invention.

The input control unit 22 in the above embodiment has been described with an example in which when one of the objects 15 selected by the user is flicked toward the cursor 14b with the finger 60, an input prediction candidate contained in the one of the objects 15 is input into the position where the cursor 14b is displayed, but the present invention is not limited to this. The input control unit 22, when detecting that one symbol displayed around the cursor 14b is selected, needs to be able to input an input prediction candidate contained in the objects into the cursor 14b, and input control described below may be performed, for example. Note that an explanation will be made without being limited to the input for the mail application in the following description.

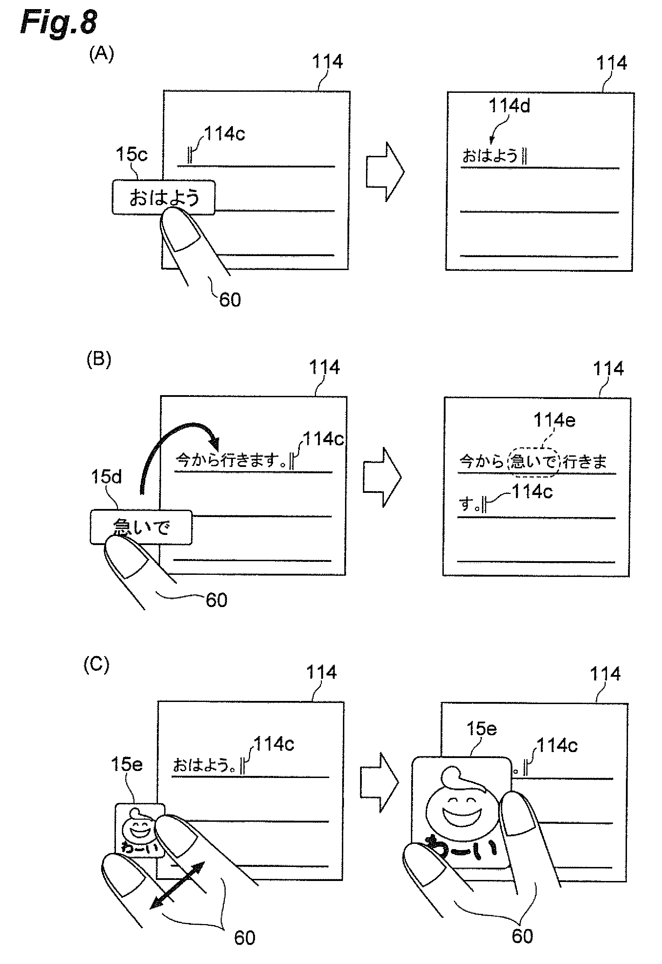

Fig. 8(A) is an explanatory diagram for explaining input control that is different from that of the above-described embodiment in the input control unit. A cursor 114c indicates a position where a character to be input next is to be displayed. For example, the input control unit 22 may, after detecting that one object 15c displayed around the cursor 114c is tapped with the finger 60 of the user via the touch panel display 3 (see Fig. 1), display a character 114d as an input prediction candidate corresponding to the one object in a display region 114. More specifically, after the object 15c in which a character string of 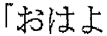 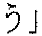 is contained is tapped by the user, the character string 114d of 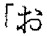 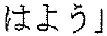 is input in the display region 114.

Fig. 8(B) is, similarly to Fig. 8(A), an explanatory diagram for explaining input control that is different from that of the above-described embodiment in the input control unit 22. For example, the input control unit 22 may, after detecting that one object 15d displayed around the cursor 114c is dragged and dropped in the direction of an arrow indicated in Fig. 8(B) by the finger 60 of the user via the touch panel display 3 (see Fig. 1), display a character 114e as an input prediction candidate corresponding to the one object at the position where it is dropped in the display region 114. More specifically, after an object 15d in which a character string of 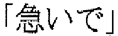 is contained is dragged and dropped by the user, the character string 114e of 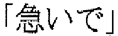 is inserted into the position where it is dropped in the display region 114.

Fig. 8(C) is, similarly to Fig. 8(A), an explanatory diagram for explaining input control that is different from that of the above-described embodiment in the input control unit 22. For example, the input control unit 22 may, after detecting that one object 15e displayed around the cursor 114c is pinched out with the fingers 60 of the user via the touch panel display 3 (see Fig. 1), display the one object in an increased size. In other words, after the object 15e in which an image is contained is pinched out by the user, the size of the object becomes larger. Subsequently, selecting operation such as flick, tap, or drag and drop is performed by the user, whereby the image in larger size is input in the display region 114. Alternatively, instead of the pinch-out operation described above, double-tap operation may be performed. In addition, the object 15e may be an object in which a character string is contained other than only an object in which an image is contained.

In addition, the input control unit 22 may, after detecting that the one object 15e displayed around the cursor 114b is pinched in with the fingers 60 of the user via the touch panel display 3, display the one object in a reduced size. Subsequently, selecting operation such as flick, tap, or drag and drop is performed by the user, whereby the image in smaller size is similarly input in the display region 114.

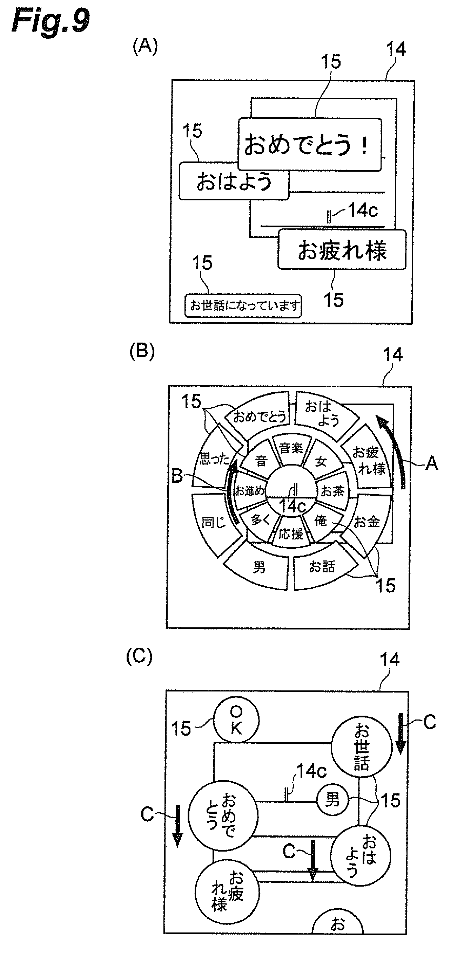

In addition, the symbol generation unit 21 in the above embodiment has been described with an example in which input prediction candidates are read from the dictionary table 31 or other tables contained in the input prediction candidate storage unit 30 and the objects 15 are randomly displayed around the cursor 14c in the display region 14 as depicted in Fig. 9(A), but the present invention is not limited to this.

Fig. 9(B) is a diagram for explaining a method for displaying objects. For example, the symbol generation unit 21 may display the objects 15 on the basis of the positional information of the cursor 14c in such a manner that the objects surround the cursor 14c. More specifically, the objects 15 may be displayed along the circumferential direction of a circle centering on the cursor 14c. It is also possible to arrange the objects 15 in a plurality of concentric layers as depicted in Fig. 9(B). In this case, for example, the objects 15 with higher priorities assigned by the priority assigning unit 23 may be displayed at positions closer to the cursor 14c. Alternatively, the objects 15 arranged in the outer circumference may be displayed while slowly rotating counterclockwise (in the direction of an arrow A indicated in Fig. 9(B)), whereas the objects 15 arranged in the inner circumference may be displayed while slowly rotating clockwise (in the direction of an arrow B indicated in Fig. 9(B)). Accordingly, the objects 15 are displayed more visually, which exerts an effect of catching the user's eyes more easily.

Fig. 9(C) is, similarly to Fig. 9(B), an explanatory diagram for explaining a method for displaying objects. For example, the symbol generation unit 21 may display the objects 15 on the basis of the positional information of the cursor 14c in such a manner that the objects move around the cursor 14c. More specifically, the objects 15 may be displayed while moving near the cursor 14c from the upper side of the display region 14 toward the lower side of the display region 14 (in the direction of arrows indicated in Fig. 9(C)). In addition, the symbol generation unit 21 may repeat the displaying of the objects 15, once having reached the lower side of the display region 14, moving again from the upper side of the display region 14 to the lower side of the display region 14, or may perform the displaying of different objects 15 consecutively moving from the upper side of the display region 14 to the lower side of the display region 14. Furthermore, the objects 15 may be moved straight in the direction indicated by the arrows depicted in Fig. 9(C) or moved snaking (in a swinging image). In addition, the direction in which the objects 15 are moved may be the horizontal direction other than only the vertical direction.

In addition, the symbol generation unit 21 may increase the sizes of the objects 15 and decrease the number of the objects 15 displayed in the display region 14 for a visually-impaired person, for example.

It is desirable that the methods for displaying the objects 15 by the symbol generation unit 21 as described above be configured to allow the user to freely select from a setup menu, for example.

The above embodiment has been described with an example in which the priority assigning unit 23 divides the objects 15 into the first group and the second group on the basis of the use frequencies and the symbol generation unit 21 switches the groups from one to another by receiving input of "NEXT CANDIDATE" button among the buttons 18a displayed in the menu display region 18 via the touch panel display 3. However, the present invention is not limited to this.

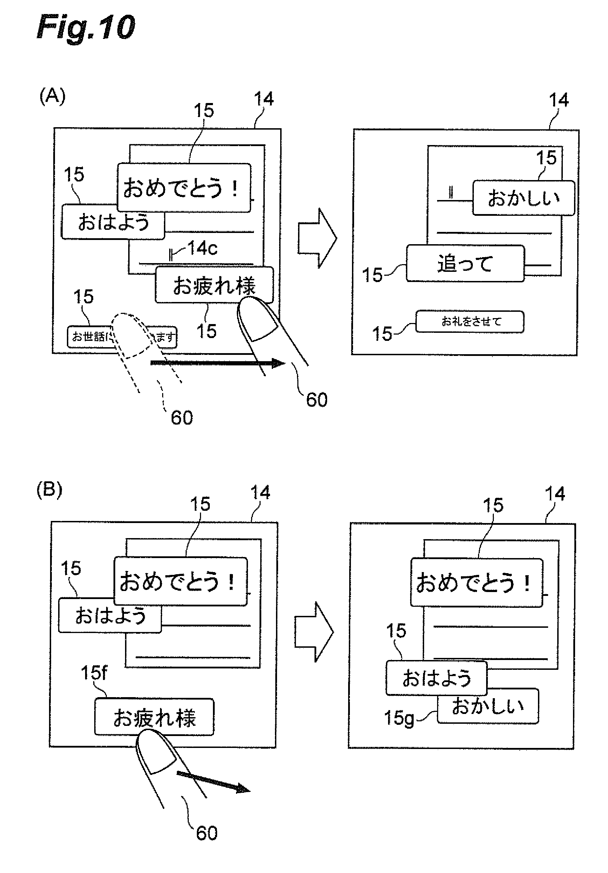

Fig. 10(A) is an explanatory diagram for explaining a method for switching display objects. For example, the symbol generation unit 21 may, after detecting that flick or drag in a predetermined direction on the touch panel display 3 is performed, display the objects 15 belonging to another group in place of the objects 15 displayed before the flick or drag. More specifically, when the objects 15 belonging to the first group are displayed around the cursor 14c, the symbol generation unit 21 may, after detecting a sliding (flick) operation from left to right like turning a page via the touch panel display 3, switch the display so that the objects 15 belonging to the second group (another group) are displayed around the cursor 14c.

Fig. 10(B) is an explanatory diagram for explaining a method for switching display objects. For example, after detecting that one object 15f is flicked or dragged toward outside of the touch panel display 3, the symbol generation unit 21 may display, in place of the object 15f thus flicked or dragged, another object 15g that is not displayed before this flick or drag is performed. More specifically, the symbol generation unit 21 may, after detecting that the one object 15f is dragged and dropped to the outside of the display region 14 via the touch panel display 3, delete the object 15f thus dropped and instead display the object 15g corresponding to a new candidate in the display region 14. In this case, the symbol generation unit 21 may display the object 15g corresponding to the new candidate behind the objects 15 already displayed as depicted in Fig. 10(B).

The above embodiment has been described with an example in which the priority assigning unit 23 assigns priorities to input prediction candidates on the basis of use frequencies read from the history management table 41, but the present invention is not limited to this. For example, in the prediction conversion table 33 of the input prediction candidate storage unit 30, other than input prediction candidates associated with character strings, attribute information such as "private" or "business" may be associated with the character strings. Examples of the attribute information include category information. A character string 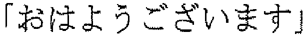 can be associated with category information of "for general/business use", and a character string 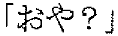 can be associated with category information of "for private use".

The priority assigning unit 23 can assign priorities to input prediction candidates, for example, based on attributes of the terminal at the time of character input such as input time or a destination address of a mail and the above-described attribute information. The symbol generation unit 21 can determine colors, sizes, and overlapping order of objects on the basis of the priorities thus assigned. Accordingly, it is possible to provide respective user interfaces based on usage scenes.

In addition, the priority assigning unit 23 can, when assigning priorities on the basis of attributes of the terminal at the time of character input such as input time or a destination address of a mail, use information on the use frequencies stored in the history management table 41. For example, if it is between 5:00 AM and 11:00 AM, by incrementing the number of times as the use frequency for an input prediction candidate 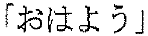 stored in the history management table 41 by "five", it becomes possible to raise the priority of the input prediction candidate 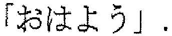 Similarly, by incrementing the number of times as the use frequency for an input prediction candidate 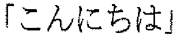 stored in the history management table 41 by five if it is between 11:00 AM and 17:00 PM, or by incrementing the number of times as the use frequency for an input prediction candidate 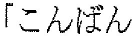 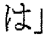 stored in the history management table 41 by "five" if it is between 17:00 PM and 5:00 AM, for example, the same process becomes possible.

The mobile terminal 1 of the above embodiment has been described with an example in which the character input control unit 10 operates on the mail application, but the present invention is not limited to this, and it is possible to start up the character input control unit 10 also on a memo pad application or a scheduler, for example.

The mobile terminal 1 of the above embodiment has been described with an example in which input of a character string from the user is received via the input keys 19a displayed on the touch panel display 3, but the present invention is not limited to this, and a configuration for receiving the input via hard keys provided to a surface of the housing, for example, is also conceivable.

In addition, in the history management table 41 stored in the history management storage unit 40, other than the numbers of times as the use frequencies, "a subsequent input prediction candidate" that can be input subsequently to an input prediction candidate may be stored. For example, if a character string of 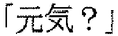 is input after the input of the input prediction candidate 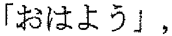 this character string of 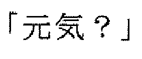 is stored as a subsequent input prediction candidate. Accordingly, after an object corresponding to the input prediction candidate 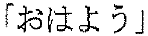 is flicked, the objects 15 corresponding to the character string 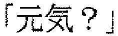 is displayed around the cursor 14b.

### Reference Signs List

1... mobile terminal, 2... housing, 3... touch panel display (input means), 3a... touch panel display control unit, 5... application control unit, 10... character input control unit (character input control), 13... mail screen, 14... message body display region, 14a... message body, 14b... cursor (input position), 15... objects (pieces of input prediction candidate information, symbols), 17... input character display region, 18... menu display region, 18a... menu buttons, 19... input region, 19a... input keys, 20... control unit, 21... symbol generation unit (symbol generation means), 22... input control unit (input control means), 23... priority assigning unit (priority assigning means), 30... input prediction candidate storage unit (input prediction candidate storage means), 31... dictionary table, 32... pictograph table, 33... prediction conversion table, 40... history management storage unit, 41... history management table, 51... CPU, 52... main storage unit, 53... auxiliary storage unit, 54... input unit, 55... output unit

## Claims

1. A mobile terminal comprising:
a touch panel display;
input prediction candidate storage means for storing input prediction candidates associated with character strings;
input prediction candidate display means for referring to the input prediction candidate storage means on the basis of a character string input from input means and displaying corresponding input prediction candidates as pieces of input prediction candidate information around an input position; and
input control means for, after detecting that one piece of input prediction candidate information is selected, inputting a corresponding input prediction candidate displayed as the piece of input prediction candidate information into the input position.

2. The mobile terminal according to claim 1, wherein the input prediction candidate display means displays the pieces of input prediction candidate information as symbols.

3. The mobile terminal according to claim 1 or 2, further comprising:
priority assigning means for assigning priorities to the input prediction candidates stored in the input prediction candidate storage means, wherein
the input prediction candidate display means changes a display form of the pieces of input prediction candidate information displayed around the input position on the basis of the priorities.

4. The mobile terminal according to claim 3, wherein
the priority assigning means divides the input prediction candidates into a plurality of groups on the basis of the priorities, and
the input prediction candidate display means switches the pieces of input prediction candidate information to be displayed around the input position from one group to another.

5. The mobile terminal according to claim 4, wherein the input prediction candidate display means, after detecting that flick or drag is performed in a predetermined direction on the touch panel display, displays the pieces of input prediction candidate information belonging to another group in place of the pieces of input prediction candidate information displayed before the flick or drag is performed.

6. The mobile terminal according to claim 4 or 5, wherein the input prediction display means, after detecting that flick or drag is performed on one piece of input prediction candidate information toward outside of the touch panel display, displays another piece of input prediction candidate information that is not displayed before the flick or drag is performed in place of the piece of input prediction candidate information on which the flick or drag is performed.

7. The mobile terminal according to any one of claims 3 to 6, wherein the priority assigning means assigns the priorities on the basis of use frequencies of the input prediction candidates.

8. The mobile terminal according to any one of claims 3 to 7, wherein
attribute information is associated with each of the input prediction candidates stored in the input prediction candidate storage means, and
the priority assigning means assigns the priorities on the basis of an attribute of the terminal at time of inputting and the attribute information.

9. The mobile terminal according to any one of claims 1 to 8, wherein the input prediction candidate display means displays the pieces of input prediction candidate information surrounding the input position on the basis of positional information of the input position.

10. The mobile terminal according to any one of claims 1 to 9, wherein the input prediction candidate display means displays the pieces of input prediction candidate information moving around the input position on the basis of positional information of the input position.

11. The mobile terminal according to any one of claims 1 to 10, wherein the input control means, after detecting that one piece of input prediction candidate information is tapped or that one piece of input prediction candidate information is flicked toward the input position, inputs an input prediction candidate displayed as the piece of input prediction candidate information into the input position.

12. The mobile terminal according to any one of claims 1 to 11, wherein the input control means, after detecting that one piece of input prediction candidate information is dragged and dropped between character strings that have been input, inputs an input prediction candidate displayed as the piece of input prediction candidate information between the character strings.

13. The mobile terminal according to any one of claims 1 to 12, wherein
the input prediction candidate display means, after detecting that one input prediction candidate is pinched out or double tapped, displays a piece of input prediction candidate information corresponding thereto in enlarged form, and
the input control means adjusts a display size of the input prediction candidate to be input into the input position on the basis of a display size of the piece of input prediction candidate information.

14. The mobile terminal according to any one of claims 1 to 13, wherein
the input prediction candidate display means, after detecting that one input prediction candidate is pinched in, displays a piece of input prediction candidate information corresponding thereto in reduced form, and
the input control means adjusts a display size of the input prediction candidate to be input into the input position on the basis of a display size of the piece of input prediction candidate information.
